(19) Europäisches Patentamt
European Patent Office
Office européen des brevets

(11) **EP 3 182 396 A1**

(12) **EUROPEAN PATENT APPLICATION**

(43) Date of publication:
**21.06.2017 Bulletin 2017/25**

(51) Int Cl.:
**G09C 5/00** (2006.01)     **H04L 9/06** (2006.01)

(21) Application number: **16201957.4**

(22) Date of filing: **02.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.12.2015 EP 15307002**

(71) Applicant: **Thomson Licensing**
**92130 Issy-les-Moulineaux (FR)**

(72) Inventors:
• **LELABOURIER, Marc**
  **35576 Cesson Sévigné (FR)**
• **ELUARD, Marc**
  **35576 Cesson Sévigné (FR)**

(74) Representative: **Ståhl, Björn Niclas**
**TECHNICOLOR**
**1-5, rue Jeanne d'Arc**
**92130 Issy-les-Moulineaux (FR)**

(54) **DEVICES AND METHODS FOR ENCRYPTION AND DECRYPTION OF GRAPHICAL 3D OBJECTS**

(57)     A processor (111) of an encryption device (110) obtains (S202) a graphical 3D object having a plurality of points, each point being defined by at least three coordinate values, generates (S204) a mask, applies (S206) the mask, using an operator, to at least selected points of the plurality of points to obtain an encrypted graphical 3D object and outputs (S208) the encrypted graphical 3D object. The mask is applied separately to the coordinate values or wherein the mask is applied to the at least three coordinate values together and separately to each selected point. In an embodiment, the processor (111) applies the mask digit wise so that each input digit results in an output digit. The processor (111) can also perform at least one of scaling and translation on the graphical 3D object before applying the mask. Decryption of an encrypted graphical 3D object is an essentially reverse procedure.

Figure 2

**Description**

TECHNICAL FIELD

The present disclosure relates generally to digital content protection and in particular to encryption and decryption of graphical 3D objects.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Conventional approaches provide many different ways of protecting digital graphical 3D objects.

A first way that works for objects no matter the representation is bulk encryption, i.e. simply inputting the digital file for the object in an encryption device that uses e.g. AES-256 or RSA and treats the file as a sequence of bytes. The result is an essentially random sequence of bytes that cannot be interpreted by a 3D renderer without decryption. Bulk encryption ensures security during transport only.

A second way is point-based encryption that works for objects represented by a set of points, usually joined by surfaces. The basic idea is to use reversible techniques to change the position of the points that compose the object. A secret key may be used to limit access to authorized users only. The shape of the output depends of the algorithm that is used. In all cases, the output is an object with aberrant surfaces. Therefore, even though the result is a 3D object, a renderer may have trouble displaying it. Examples of such solutions are found in EP 2453430, US 8869292 and EP 2725567.

A third way is surface-based encryption. The basic idea is to use reversible techniques to change the definition of the surfaces that compose the object. Examples of reversible techniques are controlled surface exchange and pseudo-random surface addition. A secret key may be used to limit access to authorized users only. As for point-based encryption, the shape of the output depends on the algorithm used. In all cases, result is an object with aberrant surfaces. Therefore, even though the result is a 3D object, a renderer may have trouble displaying it. Examples of such solutions are found in WO 2012/000898 and EP 2665033.

A fourth way, described in WO 2013/034530, transforms any sequence of bits, such as the bits of the file of a 3D object, into a dense set of points that forms a 3D object that can be displayed with other 3D objects. This way can be useful to transform any digital object into a 3D object, but due to the technique used, the larger the size, the bigger the risk of point collision as the space of the 'ciphertext' is small.

It will be appreciated that it is desired to have a solution that overcomes at least part of the conventional problems related to encryption of graphical 3D objects.

SUMMARY OF DISCLOSURE

In a first aspect, the present principles are directed to a method for encrypting a graphical 3D object having a plurality of points, each point being defined by at least three coordinate values. At least one processor of an encryption device obtains the graphical 3D object, generates a mask, applies the mask to at least selected points of the plurality of points to obtain an encrypted graphical 3D object, and outputs the encrypted graphical 3D object. The mask is applied separately to the coordinate values or wherein the mask is applied to the at least three coordinate values together and separately to each selected point.

Various embodiments of the first aspect include:

- That the mask is applied using an operator and digit wise so that each input digit results in an output digit; and
- That the at least one processor further performs at least one of scaling and translation on the graphical 3D object before applying the mask.

In a second aspect, the present principles are directed to an encryption device for encrypting a graphical 3D object having a plurality of points, each point being defined by at least three coordinates. The encryption device comprises an interface configured to output an encrypted graphical 3D object and at least one processor configured to obtain the graphical 3D object, generate a mask, and apply the mask to at least a subset of the plurality of points to obtain the encrypted graphical 3D object. The at least one processor is configured to apply the mask separately to the coordinate values or to apply the mask to the at least three coordinate values together and separately to each selected point.

Various embodiments of the second aspect include:

- That the at least one processor is configured to apply the mask using an operator and digit wise so that each input digit results in an output digit; and
- That the at least one processor is further configured to perform at least one of scaling and translation on the graphical 3D object before applying the mask.

In a third aspect, the present principles are directed to a method for decrypting an encrypted graphical 3D object having a plurality of points, each point being defined by at least three coordinate values. At least one processor of a decryption device obtains the encrypted graphical 3D object, generates a mask, applies the mask to at least selected points of the plurality of points to obtain a decrypted graphical 3D object, and outputs the decrypted graphical 3D object. The mask is applied separately to the coordinate values or wherein the mask is applied to the at least three coordinate values together and separately to each selected point.

Various embodiments of the third aspect include:

- That the mask is applied using an operator and digit wise so that each input digit results in an output digit; and
- That the at least one processor further performs at least one of scaling and translation on the decrypted graphical 3D object.

In a fourth aspect, the present principles are directed to a decryption device for decrypting an encrypted graphical 3D object having a plurality of points, each point being defined by at least three coordinates. The encryption device comprises an interface configured to output a decrypted graphical 3D object and at least one processor configured to obtain the encrypted graphical 3D object, generate a mask and apply the mask to at least a subset of the plurality of points to obtain the decrypted graphical 3D object. The at least one processor is configured to apply the mask separately to the coordinate values or to apply the mask to the at least three coordinate values together and separately to each selected point.

Various embodiments of the fourth aspect include:

- That the at least one processor is configured to apply the mask using an operator and digit wise so that each input digit results in an output digit; and
- That the at least one processor is further configured to perform at least one of scaling and translation on the decrypted graphical 3D object.

In a fifth aspect, the present principles are directed to a computer program comprising program code instructions executable by at least one processor for implementing the steps of a method according to any embodiment of the second aspect.

In a sixth aspect, the present principles are directed to a computer program product which is stored on a non-transitory computer readable medium and comprises program code instructions executable by at least one processor for implementing the steps of a method according to any embodiment of the second aspect.

BRIEF DESCRIPTION OF DRAWINGS

Preferred features of the present principles will now be described, by way of non-limiting example, with reference to the accompanying drawings, in which

Figure 1 illustrates a system implementing the present principles;
Figure 2 illustrates an encryption method according to a first embodiment of the present principles; and
Figure 3 illustrates a decryption method according to a first embodiment of the present principles.

DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

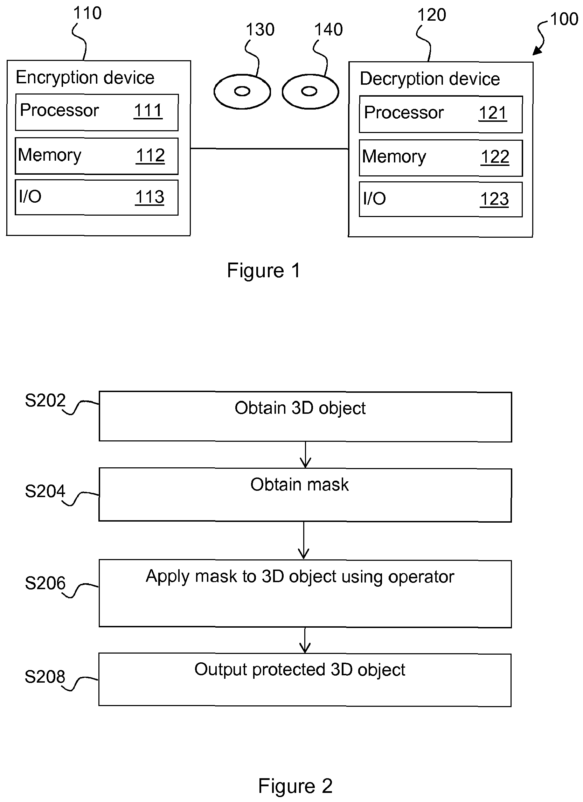

Figure 1 illustrates an exemplary system 100 implementing the present principles. The system 100 includes an encryption device 110 configured to encrypt a graphical 3D object and a decryption device 120 configured to decrypt an encrypted graphical 3D object. Each device 110, 120 includes at least one hardware processing unit ("processor") 111, 121, memory 112, 122 and at least one communications interface 113, 123 configured to communicate with the other device. The skilled person will appreciate that the illustrated devices are very simplified for reasons of clarity and that real devices in addition would comprise features such as internal connections and power supplies. Non-transitory storage media 130, 140 respectively store instructions that, when executed by a processor, encrypt a graphical 3D object and decrypt an encrypted graphical 3D object as further described hereinafter.

A common way is to define a graphical 3D object as a set of three-dimensional points (P) and a set of surfaces (S) defined on the set of points. The 3D objects of the present principles are defined this way.

Figure 2 illustrates (together with Figure 1) encryption of a 3D object according to a preferred embodiment of the present principles. In step S202, the processor 111 of the encryption device 110 receives a 3D object. The 3D object can be received from another device (not shown) via communications interface 113 or retrieved from the memory 112.

In step S204, the processor 111 generates a mask that in step S206 is applied, using an operator, to each point or to each coordinate (or to a subset of the points or to a subset of the coordinates) of the 3D object to obtain a protected 3D object corresponding to the initial object.

In step S208, the processor 111 outputs the protected 3D object via the communications interface 113, directly or indirectly, to the decryption device 120.

The operator must be reversible and the mask must be known by an authorized user in order to retrieve the original object. By application of such an operator, backward compatibility of protected object rendering can be ensured.

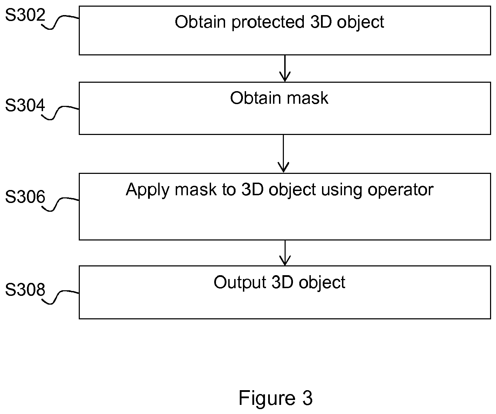

Figure 3 illustrates (together with Figure 1) decryption of a 3D object according to a preferred embodiment of the present principles. In step S302, the processor 121 of the decryption device 120 receives the protected 3D object. The protected 3D object can be received from the encryption device 110 via communications interface 123 or be retrieved from the memory 122.

In step S304, the processor 121 generates a mask that in step S306 is applied, using an operator, to each point or to each coordinate of the 3D object to obtain a protected 3D object corresponding to the initial object.

In step S308, the processor 121 outputs the protected 3D object to the memory 122, to a display (not shown) or via the communications interface 123, directly or indirectly, to a further device (not shown).

The mask is preferably applied to all of the points of the 3D object, but it is also possible to apply the mask to a subset of the points or of the coordinates, such as the first 150 or 200 in a given list of points. In this case, this applies to both the encryption side and the decryption side.

The mask is preferably an unpredictable sequence that can be generated by both the encryption device 110 and by the decryption 120 of authorized users. How to determine an authorized user is well known in the art and will not be described further beyond the fact that it usually involves the knowledge of secret information.

As a coordinate is a floating value composed by several digits, each digit having a value between 0 and 9, the mask is a digit list that comprises digits with values between 0 and 9. It is noted that the mask preferably comprises at least as many digits as the longest coordinate value; exactly as many digits being the optimum. To obtain such a mask, it is preferred to use a key-based generator. The generator can be based on pseudo-random generation or a cryptographic hash algorithm that takes a key (also known as seed) as input and output a digit list. The generator can thus ensure the unpredictability and the key can allow an authorized user to retrieve the correct mask. In variants, other representations such as octal and hexadecimal are used.

It is noted that the same mask can be applied to all the coordinates, but it is also possible to apply the mask to all the points, thus essentially to a concatenation of the coordinates of a point. Another way of putting the latter is that the mask is split into three submasks, one for each dimension; this is analogous to generating three submasks.

As for the mask operator, given a coordinate and a mask, it should output a coordinate. In order to control the transformation, the mask is applied digit by digit; i.e., not on the complete coordinate. So the operator takes two digits between 0 and 9 (one for the coordinate and one for the mask) and produces a digit between 0 and 9. Two examples of operators are addition modulo 10 and (bit level) XOR.

More formally, a part of a mesh representation of an object O consists of an ordered list L of N 3D points $\mathbf{P}i=(x_i, y_i, z_i)$. To protect the object, for each one of the points $\mathbf{P}_i$, the following steps are performed on each coordinate $\mathbf{c}_i$ composed by $m$ digits ($\mathbf{c}_i = \mathbf{d}_1...\mathbf{d}_k.\mathbf{d}_{k+1} ... \mathbf{d}_m$) of $\mathbf{P}_i$:

1. For each digit $\mathbf{d}_j$ of coordinate $\mathbf{c}_i$, using a secret key K, pseudo-randomly generate a value $\sigma_K^{(i)}(j)$;

2. Compute $\mathbf{d}_j \oplus \sigma_K^{(i)}(j)$ for each $\mathbf{d}_j$ in $\mathbf{c}_i$

3. Construct $\mathbf{c}_{\sigma_K^{(i)}} = \bigcup_j (\mathbf{d}_j \oplus \sigma_K^{(i)}(j))$ ; where $\bigcup_j()$ denotes concatenation.

For a predetermined mask $\sigma_K$ applied to each coordinate this becomes:

1. Compute $\mathbf{d}_j \oplus \sigma_K^{(i)}(j)$ for each $\mathbf{d}_j$ in $\mathbf{c}_i$

2. Construct $\mathbf{c}_{\sigma_K^{(i)}} = \bigcup_j (\mathbf{d}_j \oplus \sigma_K^{(i)}(j))$

It is noted that the scheme is easily modified to the case where a different (sub)mask is applied to the coordinates of different dimensions.

In other words, the point $\mathbf{P}_i$ is modified as follows:

$$\mathbf{P}_i = (x_i, y_i, z_i) \Rightarrow \mathbf{P}_i = \left( x_{\sigma_K^{(x)}}, y_{\sigma_K^{(y)}}, z_{\sigma_K^{(z)}} \right)$$

To unprotect the mesh representation of the protected 3D object, the dual operation is performed. More specifically, for the 3D points composing the protected mesh, each coordinate $\mathbf{c}_i$ of $\mathbf{P}_i$ is processed as follows:

1. For each digit $\mathbf{d}_j$ of the coordinate $\mathbf{c}_i$, using the secret key K, pseudo-randomly generate a value $\sigma_K^{(i)}(j)$;

2. Compute $\mathbf{d}_j \oplus \sigma_K^{(i)}(j)$ for each $\mathbf{d}_j$ in $\mathbf{c}_i$

3. Construct $\mathbf{c}_{\sigma_K^{(i)}} = \bigcup_j \left( \mathbf{d}_j \oplus \sigma_K^{(i)}(j) \right)$

As for the decryption, with a predetermined mask, this becomes:

1. Compute $\mathbf{d}_j \oplus \sigma_K^{(i)}(j)$ for each $\mathbf{d}_j$ in $\mathbf{c}_i$

2. Construct $\mathbf{c}_{\sigma_K^{(i)}} = \bigcup_j \left( \mathbf{d}_j \oplus \sigma_K^{(i)}(j) \right)$

In other words, at each step, the point $\mathbf{P}_i$ is modified as follows:

$$\mathbf{P}_i = \left( x_{\sigma_K^{(x)}}, y_{\sigma_K^{(y)}}, z_{\sigma_K^{(z)}} \right) \Longrightarrow \mathbf{P}_i = (x_i, y_i, z_i)$$

After processing all the N points, the initial set of point coordinates L is recovered and the original object O fully restored.

It will be appreciated that while the description has used three dimensions as a preferred embodiment, the same idea can also be applied to $n$-dimensional objects with straightforward modifications.

It will be appreciated that in the case where the same mask is applied to the coordinates, then the encryption and the decryption can be highly parallelized since it does not matter in which order the points are processed.

The skilled person will realise that using the encryption method illustrated in Figure 2, it is likely that the bounding box will not be kept. This is due to the fact that a value of $n$ digits (for example 3) may be transformed into a value between $10^{n-1}$ and $10^n - 1$ (eg 100 and 999).

However, to limit this dispersion, it is possible to centre the 3D object so that negative coordinates have the same number of digits (plus or minus 1) as the positive coordinates. To avoid calculation errors, the vector used for the translation should have only integer coordinates. This translation vector is added as a point at the beginning of the list of points.

It is also possible to scale the 3D object before encryption, preferably independently for each dimension and the function used preferably ensures that the scaling and the reverse scaling do not cause any calculation errors. The scale for each dimension is expressed as a coordinate for the same dimension, resulting in a new point that is added as a second point in the list of points.

The decryption can still be performed in real time: the reverse translation and the reverse scaling can be applied to each point before the mask is applied. However, the encryption can be performed in real time but also not in real time since the value of all of the new points are to be taken into account in order to compute the two vectors - the translation vector and the scaling vector.

The default value for the translation is (0, 0, 0) and for scaling is (1, 1, 1). In the case of scaling, when the function uses floating values instead of an addition or a subtraction of an integer value, the retrieved object may differ from the original due to calculation errors made during the division and multiplication.

It will thus be appreciated that the present principles provide a solution for encryption of a graphical 3D object and for decryption of an encrypted graphical 3D object that, at least in certain cases, can improve on the conventional encryption and decryption methods. In particular, depending on the embodiment, the present solution can:

- Be performed in real time
- Be highly parallelized

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method for encrypting a graphical 3D object having a plurality of points, each point being defined by at least three coordinate values, the method comprising at at least one processor (111) of an encryption device (110):

   - obtaining (S202) the graphical 3D object;
   - generating (S204) a mask;
   - applying (S206) the mask to at least selected points of the plurality of points to obtain an encrypted graphical 3D object; and
- outputting (S208) the encrypted graphical 3D object,

wherein the mask is applied separately to the coordinate values or wherein the mask is applied to the at least three coordinate values together and separately to each selected point.

2. The method of claim 1, wherein the mask is applied using an operator and digit wise so that each input digit results in an output digit.

3. The method of claim 1, further comprising performing at least one of scaling and translation on the graphical 3D object before applying the mask.

4. An encryption device (110) for encrypting a graphical 3D object having a plurality of points, each point being defined by at least three coordinates, the encryption device comprising:

an interface (113) configured to output an encrypted graphical 3D object; and
at least one processor (111) configured to:

- obtain the graphical 3D object;
- generate a mask; and
- apply the mask to at least a subset of the plurality of points to obtain the encrypted graphical 3D object;

wherein the at least one processor (111) is configured to apply the mask separately to the coordinate values or to apply the mask to the at least three coordinate values together and separately to each selected point.

5. The encryption device of claim 4, wherein the at least one processor (111) is configured to apply the mask using an operator and digit wise so that each input digit results in an output digit.

6. The encryption device of claim 4, wherein the at least one processor (111) is further configured to perform at least one of scaling and translation on the graphical 3D object before applying the mask.

7. A method for decrypting an encrypted graphical 3D object having a plurality of points, each point being defined by at least three coordinate values, the method comprising at at least one processor (121) of a decryption device (120):

- obtaining (S302) the encrypted graphical 3D object;
- generating (S304) a mask;
- applying (S306) the mask to at least selected points of the plurality of points to obtain a decrypted graphical 3D object; and
- outputting (S308) the decrypted graphical 3D object,

wherein the mask is applied separately to the coordinate values or wherein the mask is applied to the at least three coordinate values together and separately to each selected point.

8. The method of claim 7, wherein the mask is applied using an operator and digit wise so that each input digit results in an output digit.

9. The method of claim 7, further comprising performing at least one of scaling and translation on the decrypted graphical 3D object.

10. A decryption device (120) for decrypting an encrypted graphical 3D object having a plurality of points, each point being defined by at least three coordinates, the encryption device comprising:

an interface (123) configured to output a decrypted graphical 3D object; and
at least one processor (121) configured to:

- obtain the encrypted graphical 3D object;
- generate a mask; and
- apply the mask to at least a subset of the plurality of points to obtain the decrypted graphical 3D object,

wherein the at least one processor (121) is configured to apply the mask separately to the coordinate values or to apply the mask to the at least three coordinate values together and separately to each selected point.

11. The decryption device of claim 10, wherein the at least one processor (121) is configured to apply the mask using an operator and digit wise so that each input digit results in an output digit.

12. The decryption device of claim 10, wherein the at least one processor (121) is further configured to perform at least one of scaling and translation on the decrypted graphical 3D.

13. Computer program comprising program code instructions executable by at least one processor for implementing the steps of a method according to at least one of claims 7 to 9.

14. Computer program product which is stored on a non-transitory computer readable medium (140) and comprises program code instructions executable by at least one processor for implementing the steps of a method according to at least one of claims 7 to 9.

110

130 140

120

100

| Encryption device | |
|---|---|
| Processor | 111 |
| Memory | 112 |
| I/O | 113 |

| Decryption device | |
|---|---|
| Processor | 121 |
| Memory | 122 |
| I/O | 123 |

Figure 1

S202 — | Obtain 3D object |

S204 — | Obtain mask |

S206 — | Apply mask to 3D object using operator |

S208 — | Output protected 3D object |

Figure 2

S302 ── Obtain protected 3D object

S304 ── Obtain mask

S306 ── Apply mask to 3D object using operator

S308 ── Output 3D object

Figure 3

Europäisches
Patentamt

European
Patent Office

Office européen
des brevets

## EUROPEAN SEARCH REPORT

Application Number

EP 16 20 1957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARC ELUARD ET AL: "Impact of geometry-preserving encryption on rendering time", 2014 IEEE INTERNATIONAL CONFERENCE ON IMAGE PROCESSING (ICIP), 1 October 2014 (2014-10-01), pages 4787-4791, XP055217756, DOI: 10.1109/ICIP.2014.7025970 ISBN: 978-1-47-995751-4 * section 2.2 * ----- | 1-14 | INV. G09C5/00 H04L9/06 |
| X | EP 2 528 266 A1 (THOMSON LICENSING [FR]) 28 November 2012 (2012-11-28) * page 4; figure 3 * ----- | 1-14 | |

TECHNICAL FIELDS
SEARCHED     (IPC)

G09C
H04L

The present search report has been drawn up for all claims

| Place of search | Date of completion of the search | Examiner |
|---|---|---|
| Munich | 3 May 2017 | Billet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 1957

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2017

| Patent document cited in search report | Publication date | Patent family member(s) | Publication date |
|---|---|---|---|
| EP 2528266 A1 | 28-11-2012 | CN 102855657 A<br>EP 2528266 A1<br>EP 2528267 A2<br>JP 5886130 B2<br>JP 2012243319 A<br>US 2012299915 A1 | 02-01-2013<br>28-11-2012<br>28-11-2012<br>16-03-2016<br>10-12-2012<br>29-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2453430 A
- US 8869292 B
- EP 2725567 A
- WO 2012000898 A
- EP 2665033 A
- WO 2013034530 A